# EUROPÄISCHE PATENTSCHRIFT

(11) **EP 0 486 462 B1**
(45) Veröffentlichungstag und Bekanntmachung des Hinweises auf die Patenterteilung: **24.04.1996**
(21) Anmeldenummer: 91890270.1
(22) Anmeldetag: 11.11.1991
(51) Int. Cl.: C21C 5/46

(54) **Verfahren und Einrichtung zum Verhindern einer Anlagerung von Ansätzen in einem metallurgischen Gefäss**
Method and arrangement for preventing crusts from agglomerating in metallurgical vessesl
Procédé et installation pour éviter d'incrustations dans un récipient métallurgique

(30) Priorität: 14.11.1990 DE 4036216
(43) Veröffentlichungstag der Anmeldung: 20.05.1992
(73) Patentinhaber: VOEST-ALPINE Industrieanlagenbau GmbH, A-4020 Linz (AT)
(72) Erfinder: Pirklbauer, Wilfried, Dipl.-Ing., A-4491 Niederneukirchen (AT); Ramaseder, Norbert, Dipl.-Ing., A-4020 Linz (AT); Steins, Johannes, Dipl.-Ing., A-4210 Gallneukirchen (AT)
(74) Vertreter: Wolfram, Gustav, Dipl.-Ing.

(56) Entgegenhaltungen:
- EP-A- 0 079 290
- EP-A- 0 162 949
- EP-A- 0 364 825
- DE-A- 3 729 437
- US-A- 3 334 520

## Beschreibung

Die Erfindung betrifft eine Einrichtung gemäß dem einleitenden Teil von Anspruch 1.

Aus der EP 0 162 949 A1 ist eine Einrichtung dieser Art bekannt, die bei einem Gerät zur optischen Analyse der Schlacke und des Gases in einem Konverter zur Anwendung kommt. Dabei wird eine Sonde über eine Öffnung in den oberen Bereich des Konverters eingeführt. Die Sonde enthält einen wasser- oder gasgekühlten Lichtleiter in einem Hohlrohr, an dessen Stirnseite über eine damit fest verbundene Gaszuführung Gas ausströmt, um die Lichteintrittsöffnung der Sonde vor Staub- und Schlackenablagerungen zu schützen.

Aus der EP 0 079 290 A1 ist es weiters bekannt, bei einem Konverter eine Lanzenöffnung vorzusehen, die die Wand des Konverters im oberen Wanddrittel in der Nähe seiner Mündung durchsetzt. Durch diese Lanzenöffnung ist eine mit einer Meßsonde oder einer Probennahmesonde ausgestattete Lanze ein- und ausbringbar. Eine solche eigene Lanzenöffnung ist dann zweckmäßig, wenn die Mündung des Konverters nur schwer zugänglich ist.

In der Praxis hat sich gezeigt, daß es immer wieder zu einem Zuwachsen von Lanzenöffnungen dieser Art kommt, da sich Schlakkenanlagerungen bilden, die mit der feuerfesten Auskleidung des Konverters besonders stabile Verbindungen eingehen. Eine Entfernung dieser Ablagerungen ist nur durch Aufbohren der Lanzenöffnung möglich, was oft eine Beschädigung der Ausmauerung des metallurgischen Gefäßes nach sich zieht und zudem sehr zeitaufwendig ist. Da jedoch Messungen möglichst rasch durchgeführt werden sollen, ist eine nur schwierig durchführbare Reinigung der Lanzenöffnung vor Durchführung der Messung besonders nachteilig.

Die Erfindung bezweckt die Vermeidung dieser Nachteile und Schwierigkeiten und stellt sich die Aufgabe, eine Einrichtung der eingangs beschriebenen Art zu schaffen, die ein Zuwachsen bzw. ein Anlagern von Ansätzen an der Lanzenöffnung verhindert, so daß eine Messung bzw. eine Probennahme jederzeit ohne Behinderung und auch während des Blasvorganges durchgeführt werden kann.

Diese Aufgabe wird ausgehend von einer Einrichtung wie eingangs angegeben erfindungsgemäß durch die im kennzeichnenden Teil von Anspruch 1 angegebenen Merkmale gelöst. Durch diesen Aufbau wird das Einführen der Lanze wesentlich erleichtert und an der dem Schmelzbad zugewandten Mündung der Lanzenöffnung ein Gas-Schleier gebildet.

Eine bevorzugte Ausführungsform der erfindungsgemäßen Einrichtung ist Gegenstand von Anspruch 2.

Die Erfindung ist nachfolgend anhand eines Ausführungsbeispiels näher erläutert, wobei
Fig.1 einen Teilschnitt durch einen Stahlwerkskonverter, dessen Schnittebene durch die Drehachse des Stahlwerkskonverters gelegt ist, zeigt;
Fig.2 einen Axialschnitt durch eine erfindungsgemäße Einrichtung in gegenüber Fig.1 vergrößertem Maßstab zeigt; und
Fig.3 ein Schnitt gemäß der Linie III-III der Fig.2 ist.

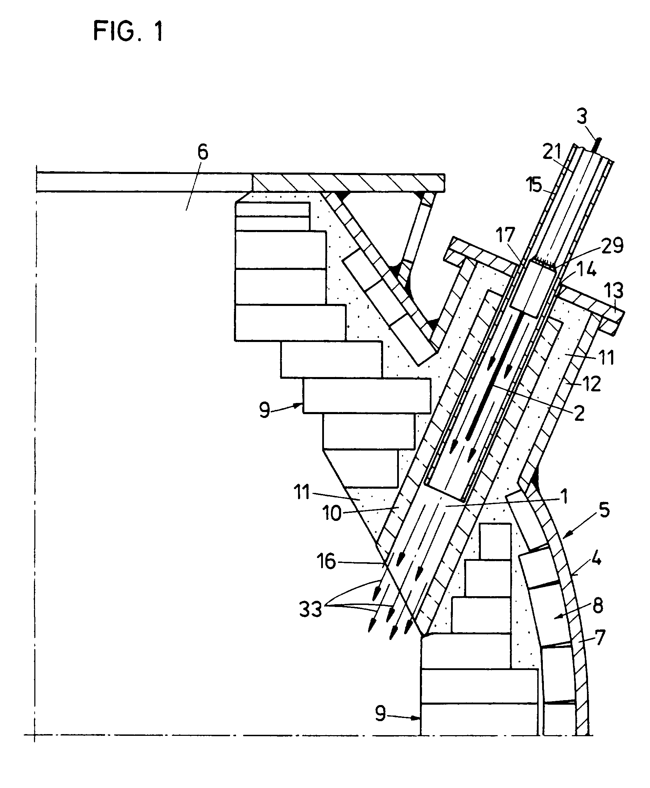

Wie aus Fig.1 ersichtlich, durchsetzt eine Lanzenöffnung 1 zum Ein- und Ausbringen einer mit einer Meß- und/oder Probennahmesonde 2 ausgestatteten Lanze 3 die Wand 4 eines Stahlwerkskonverters 5 in der Nähe der Mündung 6 derselben. Die Wand 4 des Stahlwerkskonverters 5 ist von einem Mantel 7 aus Stahl gebildet, an dem innenseitig ein Dauerfutter 8 angeordnet ist. Das Dauerfutter 8 ist von einem feuerfesten Verschleißfutter 9 bedeckt. Im Bereich der Lanzenöffnung 1 ist ein Hohlraumzylinder 10 aus feuerfestem Material vorgesehen, der mit einer feuerfesten Stampfmasse 11 in der Ausmauerung fixiert ist.

Die Wand 4 des Konverters 5 weist im Bereich der Lanzenöffnung 1 einen Stutzen 12 aus Stahl mit einer flanschartig vorspringenden Stirnplatte 13 auf. Der Hohlraumzylinder 10 ragt in den Stutzen 12 bis knapp vor die Stirnplatte 13. In der Stirnplatte 13 ist fluchtend zur Lanzenöffnung 1 eine Bohrung 14 angeordnet, durch die, wie aus Fig.1 ersichtlich, eine rohrförmige Lanzenführung 15 bis in das Innere des Hohlraumzylinders 10 einschiebbar ist. Das vordere Ende der rohrförmigen Lanzenführung liegt etwa in einer Entfernung von einem Drittel der Länge der Lanzenöffnung 1 von der innenseitigen Mündung 16 derselben.

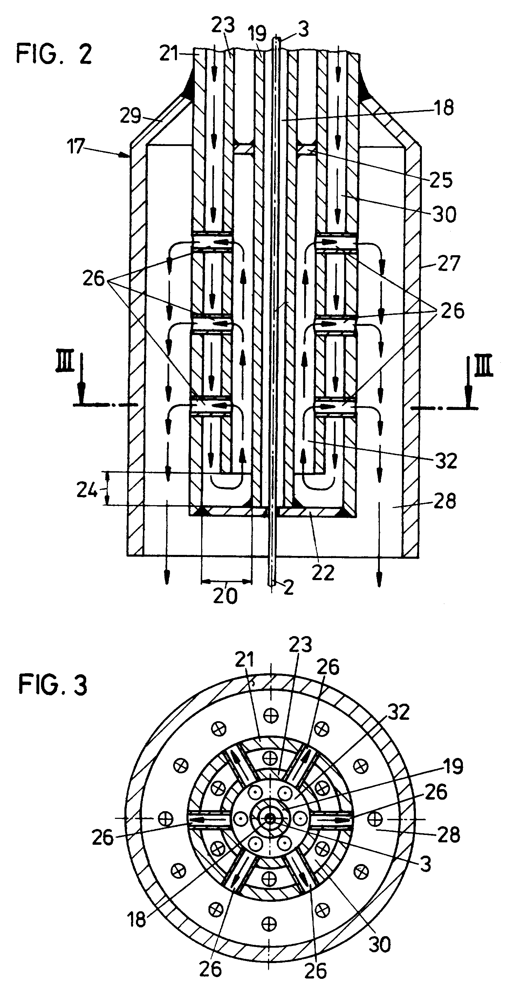

In die Lanzenführung 15 ist eine im Querschnitt dem Querschnitt der Lanzenöffnung 1 und dem der Lanzenführung 15 angepaßte glockenförmige Gasleiteinrichtung 17 einsetzbar. Der Aufbau der Gasleiteinrichtung 17 ist im Detail in den Fig.2 und 3 dargestellt. Die Gasleiteinrichtung 17 weist eine axiale Öffnung 18 zum Einschieben der Lanze 3, die zur Durchführung einer Messung und/oder einer Probennahme dient, auf, die von einem Zentralrohr 19 gebildet ist.

Dieses Zentralrohr 19 ist in peripherem Abstand 20 von einem Außenrohr 21 umgeben und mit dem Außenrohr 21 am vorderen Ende mittels eines ringförmigen Bodenbleches 22 dicht verbunden. Zwischen dem Zentralrohr 19 und dem Außenrohr 21 ist ein Mittelrohr 23 eingeschoben, welches im Abstand 24 oberhalb des Bodenbleches endet.

Zwischen dem Mittelrohr 23 und dem Zentralrohr 19 ist ein Sperring 25 eingeschweißt, der den Raum zwischen diesen beiden Rohren nach oben schließt. Dieser Sperring 25 ist im Abstand vom Bodenblech 22 angeordnet. Oberhalb des Bodenbleches 22 und unterhalb des Sperringes 25 sind in unterschiedlichen Höhen jeweils mehrere radial gerichtete Gasdurchlässe 26, die das Mittelrohr 23 mit dem Außenrohr 21 verbinden, vorgesehen.

An das Außenrohr 21 schließt etwa in Höhe des Sperringes 25 eine glockenartige Hülse 27 an, die gegenüber dem Außenrohr 21 einen Gasringraum 28 bildet, der nach unten hin, also in Richtung zum Bodenblech 22, offen ist, in die entgegengesetzte Richtung jedoch durch eine Verengung 29 der Hülse 27, mit der die Hülse 27 am Außenrohr 21 angeschweißt ist, geschlossen ist. Diese Hülse 27 überdeckt sämtliche radial gerichteten Gasdurchlässe 26.

### Die Funktion der Einrichtung ist wie folgt:

Durch den zwischen dem Mittel- 23 und dem Außenrohr 21 gebildeten Gasringraum 30 wird inertes Gas, wie zum Beispiel Stickstoff, oder Preßluft, in einer Menge von weniger als 4 Nm³/min eingeleitet. Der Gasstrom wird im Bereich des Bodenbleches 22 umgelenkt, sodaß das Gas in den zwischen Zentralrohr 19 und Mittelrohr 23 gebildeten Ringraum 32 einströmt. Von hier gelangt es über die radial gerichteten Gasdurchlässe 26 in den zwischen der glockenförmigen Hülse 27 und dem Außenrohr 21 vorgesehenen Gasringraum 28, durch den es in Richtung zum Konverterinneren strömt. Hiedurch bildet sich an der gefäßinnenseitigen Mündung 16 der Lanzenöffnung 1 ein Gasschleier 33, der einen Ansatz von Schlacke zuverlässig verhindert.

Die mit einer Meß- und/oder Probennahmesonde 2 ausgestattete Lanze 3 kann während des Blasvorganges unter Aufrechterhaltung des Gasschleiers 33 aus inertem Gas in den Konverter 5 eingebracht werden, ohne daß die Messung bzw. Probennahme durch irgendwelche Ansätze an der Lanzenöffnung 1 behindert ist.

Der an der innenseitigen Mündung 16 der Lanzenöffnung erzeugte Gasschleier 33 erspart eine aufwendige Reinigung der Lanzenöffnung. Weiters kann man auf die Anordnung eines die Lanzenöffnung 1 verschließenden Stopfens verzichten. Zudem ergibt der Gasschleier 33 trotz eines nur sehr geringen Gasverbrauches eine intensive Sondenkühlung für die in Warteposition gebrachte Lanze, sodaß stets ein guter Kontakt zwischen der Meßsonde 2 und der die Meßsonde 2 tragenden Lanze 3 gewährleistet ist und Fehlmessungen vermieden werden.

## Patentansprüche

1. Einrichtung zum Verhindern einer Anlagerung von Ansätzen, insbesondere von Schlackenansätzen, in einer eine Wand (4) eines metallurgischen Gefäßes (5) durchsetzenden Öffnung (1) für eine eine Meßsonde oder dergl. (2), mit einer in die Wandöffnung (1) einsetzbaren bzw. eingesetzten Gasleiteinrichtung (17), die an eine Gaszuführungsleitung für ein gegenüber einem im metallurgischen Gefäß enthaltenem Schmelzbad inertes Gas oder Luft angeschlossen ist, deren offenes Ende zur innenseitigen Mündung (16) der Wandöffnung (1) gerichtet ist und die eine axiale Öffnung (18) aufweist, dadurch gekennzeichnet, daß die Gasleiteinrichtung (17) glockenförmig ausgebildet und innerhalb einer in der Wandöffnung (1) in Stellung bringbaren bzw. gebrachten rohrförmigen Lanzenführung (15) vorliegt, die in die Wandöffnung (1) von außen hineinragt und darin verschiebbar ist, wobei die Gasleiteinrichtung (17) im Querschnitt an den Querschnitt der Lanzenzuführung (15) angepaßt ist, und daß die axiale Öffnung (18) der Gasleiteinrichtung (17) eine durchgehende, das Hindurchbewegen einer die Meßsonde und/oder eine Probenahmesonde (2) tragende Lanze (3) gestattende Öffnung ist.

2. Einrichtung nach Anspruch 1, dadurch gekennzeichnet,
- daß die glockenartige Gasleiteinrichtung (17) ein die axiale Öffnung (18) zum Hindurchbewegen der Lanze (3) bildendes Zentralrohr (19) aufweist, das mit Abstand (20) von einem Außenrohr (21) umgeben ist,
- daß zwischen dem Außen- (21) und dem Zentralrohr (19) ein Mittelrohr (23) eingesetzt ist,
- daß das Außenrohr (21) mit dem Zentralrohr (19) mittels eines den Ringraum (30, 32) zwischen Außen- (21) und Zentralrohr (19) abschließenden ringförmigen Bodenbleches (22) verbunden ist, wobei das Mittelrohr (23) im Abstand (24) oberhalb des Bodenbleches (22) endet,
- daß zwischen dem Mittelrohr (23) und dem Zentralrohr (19) ein Sperring (25), der den Ringraum (32) zwischen diesen beiden Rohren schließt, vorgesehen ist, welcher Sperring (25) im Abstand vom Bodenblech (22) angeordnet ist,
- daß höhenmäßig zwischen dem Bodenblech (22) und dem Sperring (25) mehrere radial gerichtete Gasdurchlässe (26) zwischen dem Mittelrohr (23) und dem Außenrohr (21) vorgesehen sind, und
- daß das Außenrohr (21) von einer an das Außenrohr (21) im Abstand vom Bodenblech dicht anschließenden glockenartigen Hülse (27) umgeben ist, sodaß zwischen dem Außenrohr (21) und der Hülse (27) ein weiterer Gasringraum (28) gebildet ist, in den die Gasdurchlässe (26) münden und der zum das Bodenblech (22) aufweisenden Ende hin nach außen offen ist.

## Claims

1. An arrangement for preventing an agglomeration of crusts, in particular of slag crusts, in an opening (1) extending through a wall (4) of a metallurgical vessel (5) and provided for a measuring probe or the like (2), said arrangement comprising a gas conducting means (17) insertable or inserted, respectively, in the wall opening (1) and connected to a gas feed line for a gas that is inert relative to a melt bath contained in the metallurgical vessel, or for air, whose open end is directed towards the inside mouth (16) of the wall opening (1) and which has an axial opening (18), characterised in that the gas conducting means (17) is designed to be bell-shaped and is present within a tubular lance guide (15) which is capable of being positioned, or is positioned, in the wall opening (1), which lance guide projects into the wall opening (1) from outside and is displaceable therein, the cross-section of the gas conducting means (17) being adapted to the cross-section of the lance guide (15), and that the axial opening (18) of the gas conducting means (17) is a throughhole which allows the measuring probe and/or a lance (3) carrying a sampling probe (2) to be moved therethrough.

2. An arrangement according to claim 1, characterised in that
- the bell-shaped gas conducting means (17) comprises a central tube (19) that constitutes the axial opening (18) for moving the lance (3) therethrough, which central tube is surrounded by an external tube (21) at a distance (20) therefrom,
- an intermediate tube (23) is inserted between the external tube (21) and the central tube (19),
- the external tube (21) is connected with the central tube (19) by means of an annular bottom plate (22) closing the annular space (30, 32) between the external (21) and central tubes (19), the intermediate tube (23) ending at a distance (24) above the bottom plate (22),
- a closure ring (25) is provided between the intermediate tube (23) and the central tube (19), said closure ring closing the annular space (32) between these two tubes, which closure ring (25) is arranged at a distance from the bottom plate (22),
- several radially directed gas passages (26) are provided between the intermediate tube (23) and the external tube (21), between the bottom plate (22) and the closure ring (25) in terms of height, and
- the external tube (21) is surrounded by a bell-shaped sleeve (27) tightly following upon the external tube (21) at a distance from the bottom plate such that a further annular gas space (28) is formed between the external tube (21) and the sleeve (27), into which the gas passages (26) enter and which is outwardly open towards the end comprising the bottom plate (22).

## Revendications

1. Installation pour empêcher un dépôt d'incrustations, en particulier d'incrustations de laitier, dans une ouverture (1), traversant une paroi (4) d'un récipient métallurgique (5), pour une sonde mesure ou analogue (2), comportant une installation de conduite de gaz (17) que l'on peut insérer, ou qui est insérée, dans l'ouverture de paroi (1), qui est reliée à une conduite d'arrivée de gaz pour de l'air ou pour un gaz inerte à l'égard d'un bain de fusion contenu dans un récipient métallurgique, dont l'extrémité ouverte est orientée vers l'embouchure (16) de l'ouverture de paroi (1) située du côté intérieur et qui présente une ouverture axiale (8), caractérisée par le fait que l'installation de conduite de gaz (17) a la forme d'une cloche et qu'elle se situe à l'intérieur d'un guidage tubulaire (15) pour lance que l'on peut amener en position, ou qui est en position, dans l'ouverture de paroi (1) et qui, de l'extérieur, pénètre dans l'ouverture de paroi (1) et peut y coulisser, l'installation de conduite de gaz (17) étant, en section, adaptée à la section du guidage de lance (15), et par le fait que l'ouverture axiale (18) de l'installation de conduite de gaz (17) est une ouverture traversante, qui autorise le mouvement de parcours d'une lance (3) portant la sonde de mesure et/ou une sonde de prise d'échantillon (2).

2. Installation selon la revendication 1, caractérisée par le fait
- que l'installation de conduite de gaz (17) en forme de cloche présente un tube central (19) qui forme l'ouverture axiale (18) pour le mouvement de parcours de la lance (3) et qui, à une certaine distance (1), est entouré par un tube extérieur (21),
- qu'entre le tube extérieur (21) et le tube central (19) est inséré un tube médian (23),
- que le tube extérieur (21) est relié au tube central (19) au moyen d'une tôle annulaire de fond (22) qui obture l'espace annulaire (30, 32) situé entre le tube extérieur (21) et le tube central (19), le tube médian (23) se terminant à une certaine distance (24) au-dessus de la tôle de fond (22),
- qu'entre le tube médian (23) et le tube central (19) est prévu un anneau de verrouillage (25) qui obture l'espace annulaire (32) existant entre ces deux tubes, anneau de verrouillage (25) qui est disposé à une certaine distance de la tôle de fond (22),
- que sur la hauteur entre la tôle de fond (22) et l'anneau de verrouillage (25) sont prévus plusieurs passages de gaz (26), orientés radialement, entre le tube médian (23) et le tube extérieur (21) et
- que le tube extérieur (21) est entouré par un fourreau en forme de cloche (27) qui se raccorde façon étanche au tube extérieur (21) à une certaine distance de la tôle de fond, de sorte qu'entre le tube extérieur (21) et le fourreau (27) se forme un autre espace annulaire de gaz (28) dans lequel les passages de gaz (26) débouchent et qui est ouvert vers l'extérieur en direction de l'extrémité présentant la tôle de fond (22).
